# FASCICULE DE BREVET EUROPEEN

(11) **EP 0 323 766 B1**
(45) Date de publication et mention de la délivrance du brevet: **31.03.1993**
(21) Numéro de dépôt: 88402633.7
(22) Date de dépôt: 19.10.1988
(51) Int. Cl.: G09F 23/06, A47F 5/01, B65D 6/08

(54) **Support pour une pancarte de signalisation ou similaire devant être apposée sur un élément constitué par une grille métallique**
Halterung für eine Informationskarte oder ähnliches, die an einem aus einem Metallgitter bestehenden Element befestigt werden soll
Recipient for a recognition card or the like to be mounted on an element consisting of a metallic grid

(30) Priorité: 24.12.1987 FR 8718102
(43) Date de publication de la demande: 12.07.1989
(73) Titulaire: ATELIERS REUNIS CADDIE, F-67300 Schiltigheim (FR)
(72) Inventeur: Le Marchand, Alain, F-67116 Reichstett (FR); Vierling, Jean-Paul, F-67600 Gambsheim (FR)
(74) Mandataire: Boutin, Antoine

(56) Documents cités:
- FR-A- 1 289 438
- FR-A- 2 551 012
- US-A- 4 106 736
- US-A- 4 217 711

## Description

La présente invention concerne les dispositifs destinés à servir de support pour une pancarte de signalisation ou similaire devant être apposée sur un élément vertical constitué par une grille métallique, par exemple l'une des parois d'une corbeille de présentation à l'intérieur d'un magasin, ou bien encore l'une des parois d'un autre type de réceptacle ou de conteneur (voir, par exemple les documents US-A-4 106 736 et US-A-4 217 711).

De tels dispositifs permettent la fixation en place de pancartes destinées à signaler la nature des produits mis en vente dans un magasin ou le prix de ceux-ci. Lorsqu'il s'agit de pancartes de signalisation devant être apposées sur les parois latérales d'une corbeille de présentation, les supports utilisés doivent permettre que ces pancartes fassent saillie en avant d'une telle corbeille de façon à être aisément visibles pour les clients circulant dans l'allée correspondante d'un magasin. De plus lorsque plusieurs corbeilles sont disposées côte à côte, il est nécessaire que ces pancartes soient disposées dans des positions décalées afin d'être toutes visibles. C'est la raison pour laquelle les dispositifs de support utilisés dans un tel cas comportent des bras de fixation de longueur réglable et dont les extrémités sont fixées sur la paroi arrière des corbeilles correspondantes. Cependant ceci implique une structure compliquée de ces dispositifs, et par suite un prix de revient relativement élevé.

C'est pourquoi la présente invention a pour objet un support de pancarte qui est conçu de façon à comporter une structure aussi simple que possible et à pouvoir néanmoins être fixée dans des positions différentes sur un élément constitué par une grille métallique, par exemple l'une des parois d'une corbeille ou de tout autre conteneur ou réceptacle.

A cet effet ce support est constitué par une plaque ou un cadre dont la face arrière porte :
- d'une part deux doigts d'accrochage ou similaires dirigés vers l'une des extrémités et s'étendant parallèlement à l'axe de cette plaque ou de ce cadre qui est destiné à être disposé horizontalement, afin que ces doigts puissent être engagés derrière deux fils verticaux de la grille correspondante,
- d'autre part un crochet dirigé en sens inverse et dont l'extrémité libre est coudée à angle droit, de manière à pouvoir être engagé derrière un fil horizontal de la grille correspondant.

Ainsi le présent support peut être fixé par accrochage à la fois sur des fils verticaux et un fil horizontal de la paroi destinée à lui servir de support. Par ailleurs sa position peut être aisément modifiée par accrochage de ce support sur des fils verticaux différents du même élément.

Cependant d'autres avantages et particularités du présent support de pancarte apparaitront au cours de la description suivante. Celle-ci est donnée en référence au dessin annexé à simple titre indicatif, et sur lequel :
La figure 1 est une vue en perspective d'une corbeille en fil métallique sur laquelle est adapté un support de pancarte suivant l'invention,
La figure 2 est une vue en perspective de la face arrière de ce support,
La figure 3 est une vue partielle en perspective illustrant l'opération de montage du présent support sur l'une des parois de la corbeille représentée à la figure 1,
La figure 4 est une vue partielle en perspective représentant ce même support après achèvement de sa mise en place.
La figure 5 est une vue partielle en coupe selon la ligne IV-IV de la figure 4, mais à échelle différente.

Dans l'exemple représenté le support de pancarte selon l'invention est adapté sur l'une des parois latérales 1 d'une corbeille de présentation 2 en fil métallique. Les parois latérales de celle-ci ainsi que sa paroi de fond sont constituées par des grilles comprenant chacune une série de fils verticaux 3 et un ou plusieurs fils horizontaux 4, le tout étant entouré par un cadre également en fil métallique.

Le présent support est constitué par un cadre 5 dont les différents côtés présentent une rainure 6 destinée à recevoir le bord correspondant d'une pancarte 8 à fixer en place. L'un de ses côtés comporte en plus une fente 7 permettant l'introduction de cette pancarte 8 à l'intérieur du cadre 5. Celui-ci peut être avantageusement fabriqué par moulage en matière plastique.

Sur sa face arrière ce cadre porte une traverse métallique 9 qui s'étend à angle droit par rapport à l'axe X-X qui est destiné à être disposée horizontalement lors de la fixation du cadre 5 sur une paroi de la corbeille 2. Cette traverse porte deux doigts d'accrochage en fil métallique qui s'étendent à peu près parallèlement à l'axe X-X en étant dirigés vers l'une des extrémités du cadre 5. Dans l'exemple représenté ces doigts d'accrochage sont constitués par deux épingles 10 en fil métallique dont les branches présentent chacune un coude 12 destiné à permettre l'engagement des extrémités libres de ces épingles derrière deux fils verticaux 3 de la paroi correspondante.

Cependant la traverse 9 porte également deux crochets 11 en fil métallique qui sont dirigés dans le sens opposé, les extrémités de ces crochets étant coudées à angle droit dans des directions opposées. De plus ces deux crochets sont avantageusement disposés de part et d'autre de l'axe X-X du cadre 5.

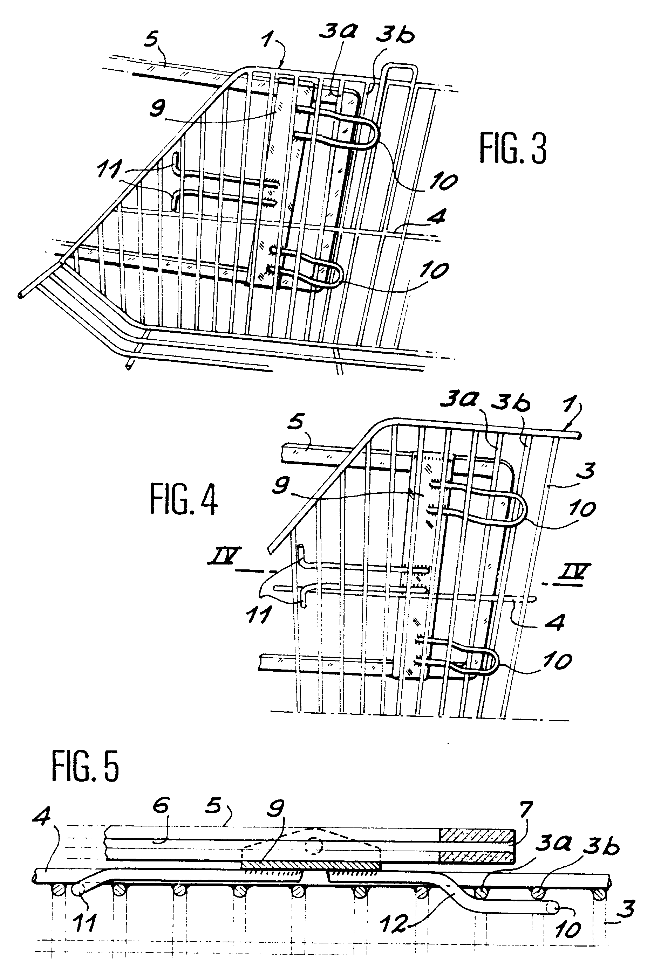

Grâce à cet agencement le support 5 peut être très aisément fixé contre la face externe de l'une des parois latérales 1 de la corbeille 2 en orientant les épingles 10 vers l'arrière pour les engager derrière deux fils verticaux 3 de la paroi correspondante, en l'occurrence les deux files 3a et 3b dans l'exemple représenté aux figures 3 et 4.

A cet effet ce support est présenté dans la position légèrement inclinée illustrée sur la figure 3 et dans laquelle son extrémité avant est plus relevée que son extrémité arrière.

Après engagement des deux épingles 10 derrière les fils verticaux 3a et 3b, il convient d'amener le support 5 dans une position horizontale afin d'engager son crochet inférieur 11 derrière le fil horizontal 4 de la paroi correspondante 1. Lorsque cette opération est achevée (voir figure 4), le présent support est parfaitement fixé en place. Cependant il convient de noter que la position de fixation de ce support peut être aisément modifiée dans le sens transversal. En effet les épingles 10 peuvent être engagées derrière des fils verticaux 3 différents de la paroi 1 correspondante suivant que l'on désire que ce support fasse plus ou moins saillie par rapport à la face avant de la corbeille 2. Dans tous les cas le crochet inférieur 11 est engagé derrière le fil horizontal 4 sur lequel il prend appui.

En conséquence grâce à des moyens très simples, le présent support peut être fixé dans des positions très différentes. De plus il est très facile de modifier sa position de fixation suivant les besoins.

L'existence des deux crochets 11, dont les extrémités sont coudées en sens inverse, permet de fixer le présent support indifféremment contre l'une ou l'autre des parois latérales de la corbeille 2. En effet, comme les épingles 10 doivent toujours être placées vers l'arrière, c'est l'un ou l'autre de ces deux crochets 11 qui se trouve alors disosé vers le bas pour être engagé sur le fil horizontal 4 de la paroi correspondante.

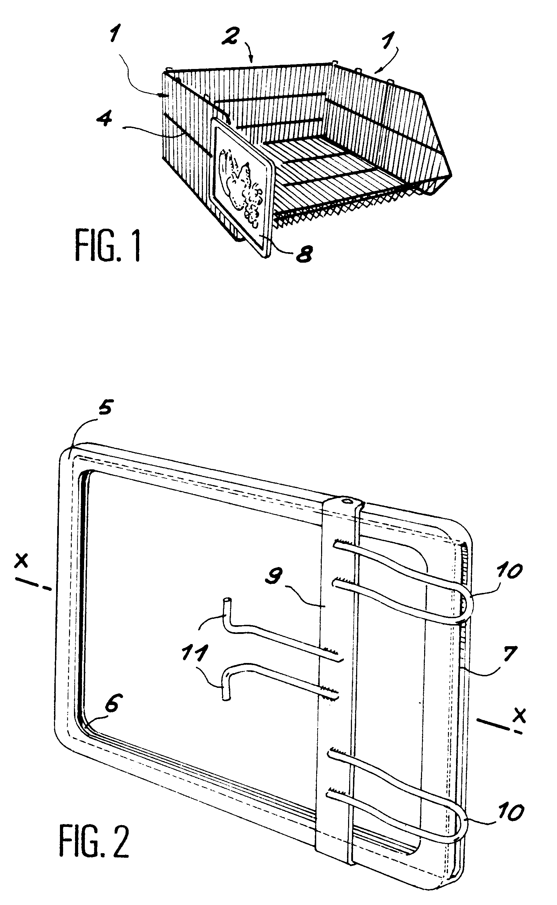

L'utilisation du présent support de pancarte ne se limite pas à son adaptation sur les parois latérales d'une corbeille de présentation, telle que la corbeille représentée à la figure 1. En effet ce support peut être adapté sur tout autre élément constitué par une grille en fil métallique, par exemple l'une des parois verticales d'un réceptacle de type différent, ou bien d'un conteneur ou même éventuellement d'un chariot de manutention.

Par ailleurs le présent support peut faire l'objet de diverses variantes. Ainsi les épingles 10 peuvent être remplacées par de simples doigts d'accrochage. Le cadre évidé 5 peut être remplacé par une plaque pleine, auquel cas les doigts d'accrochage 10 et les crochets 11 peuvent être fixés directement sur la face arrière de celle-ci.

## Revendications

1. Support pour une pancarte de signalisation ou similaire devant être apposée sur un élément vertical constitué par une grille métallique, par exemple l'une des parois d'une corbeille, d'un chariot ou autre conteneur, caractérisé en ce qu'il est constitué par une plaque ou un cadre (5) dont la face arrière porte :
- d'une part deux doigts d'accrochage (10) ou similaires dirigés vers l'une des extrémités et s'étendant parallèlement à l'axe (X-X) de cette plaque ou de ce cadre qui est destiné à être disposé horizontalement, afin que ces doigts puissent être engagés derrière deux fils verticaux (3) de la grille correspondante (1),
- d'autre part un crochet (11) dirigé en sens inverse et dont l'extrémité libre est coudée à angle droit, de manière à pouvoir être engagé derrière un fil horizontal (4) de la grille correspondante (1).

2. Support selon la revendication 1, caractérisé en ce que les doigts d'accrochage (10) de celui-ci consistent en deux épingles en fil métallique dont les branches présentent un coude (12) permettant d'engager leur extrémité libre derrière deux fils verticaux (3) de la grille correspondante (1).

3. Support selon l'une des revendications précédentes, caractérisé en ce que du côté opposé aux deux doigts d'accrochage (10), il est prévu deux crochets parallèles (11) dont les extrémités sont coudées en sens inverse.

4. Support selon l'une des revendications précédentes, caractérisé en ce que les doigts d'accrochage (10) et les crochets (11) sont portés par une traverse (9) rapportée au dos de ce support.

## Claims

1. A holder for a recognition card or the like, to be mounted on a vertical element consisting of a metallic grid, such as one of the walls of a basket, a cart or another container,
**characterized** in that it consists of a plate or a frame (5), the rear face of which is carrying :
- on the one hand, two coupling lugs (10) or the like pointing towards one of the ends of said plate or frame and extending parallel to the axis (X-X) of said plate or frame, which axis is intended for being disposed horizontally, in order that the said coupling lugs may be engaged behind two vertical wires (3) of the corresponding grid (1),
- on the other hand, a hook (11) pointing in the opposite direction, the free end of said hook being bent at a right angle so that it may be engaged behind a horizontal wire (4) of the corresponding grid (1).

2. A holder according to Claim 1, characterized in that its coupling lugs (10) consist of two hairpin-shaped metal wire loops, the legs of which present a bend (12) by means of which their free ends may be engaged behind two vertical wires (3) of the corresponding grid (1).

3. A holder according to one of the preceding Claims, characterized in that there are provided, on the side opposite the two coupling lugs (10), two parallel hooks (11), the ends of which are bent towards opposite directions.

4. A holder according to one of the preceding Claims, characterized in that the coupling lugs (10) and the hooks (11) are carried by a crosspiece (9) mounted on the back of said holder.

## Patentansprüche

1. Halterung für eine Informationskarte oder ähnliches, die an einem aus einem Metallgitter bestehenden vertikalen Element, beispielsweise an einer der Seitenwände eines Korbes, eines Einkaufswagens oder eines anderen Behälters befestigt werden soll, dadurch gekennzeichnet, daß sie eine Platte oder einen Rahmen (5) aufweist, dessen Rückseite
- einerseits zwei Befestigungsfinger (10) o. dgl., die auf einen der Ränder zu gerichtet sind und sich parallel zu der Achse (X-X) der Platte oder des Rahmens erstrecken, die horizontal angeordnet werden soll, damit die Befestigungsfinger hinter zwei vertikale Drähte (3) des jeweiligen Metallgitters (1) greifen können, und
- andererseits einen Haken (11), der im umgekehrten Sinn gerichtet ist und dessen freies Ende rechtwinklig umgebogen ist, damit er hinter einen horizontalen Draht (4) des jeweiligen Metallgitters (1) greifen kann, trägt.

2. Halterung nach Anspruch 1, dadurch gekennzeichnet, daß die Befestigungsfinger (10) aus zwei haarnadelförmigen Metalldrähten bestehen, deren Schenkel eine Abkröpfung (12) aufweisen, die es ermöglicht, daß ihr freies Ende hinter zwei vertikale Drähte (3) des jeweiligen Metallgitters (1) greifen kann.

3. Halterung nach einem der vorangehenden Ansprüche, dadurch gekennzeichnet, daß auf der den beiden Befestigungsfingern (10) abgekehrten Seite zwei parallele Haken (11) vorgesehen sind, deren freie Enden in entgegengesetzter Richtung umgebogen sind.

4. Halterung nach einem der vorangehenden Ansprüche, dadurch gekennzeichnet, daß die Befestigungsfinger (10) und die Haken (11) an einer am Rücken der Halterung angeordneten Traverse (9) sitzen.
